(19) Europäisches Patentamt
European Patent Office
Office européen des brevets

(11) Publication number: 0 202 550 B1

# (12) EUROPEAN PATENT SPECIFICATION

(45) Date of publication of the patent specification: 27.09.89

(51) Int. Cl.[4]: C08F 210/12, C08F 4/64

(21) Application number: 86106298.2

(22) Date of filing: 07.05.86

(54) Process for the preparation of ethylene-propylene-diene terpolymers.

(30) Priority: 22.05.85 IT 2083285

(43) Date of publication of application: 26.11.86 Bulletin 86/48

(45) Publication of the grant of the patent: 27.09.89 Bulletin 89/39

(84) Designated Contracting States: BE DE FR GB NL SE

(56) References cited:
EP-A- 0 144 021
AT-B- 347 678
GB-A- 2 099 836

The file contains technical information submitted after the application was filed and not included in this specification

(73) Proprietor: AUSIMONT S.p.A., 31, Foro Buonaparte, I-20121 Milano(IT)

(72) Inventor: Banzi, Viviano, 3/p. Via Pasta, I-44049 Vigarano Mainarda/Ferrara(IT)
Inventor: Milani, Federico, 2, via Kennedy, I-45030 S.Maria Maddalena/Rovigo(IT)

(74) Representative: Jaumann, Paolo, Studio Consulenza Brevetti Jaumann Piazza Castello, 2, I-20121-Milano(IT)

EP 0 202 550 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Background of the Invention

#### 1. Field of the Invention

The present invention relates to a process for the preparation of vulcanizable elastomeric copolymers of ethylene with propylene and one or more conjugated diene(s).

More precisely, it relates to a process for the copolymerization of ethylene with propylene and butadiene and to elastomeric terpolymers obtained thereby,having low values of tension set at low temperatures.

#### 2. Description of the Prior Art

The elastomeric terpolymers, containing butadiene in lieu of a non-conjugated diene, for example 5-ethylidene-2-norbornene or 1,4-hexadiene (commonly used) are greatly interesting, because of the low cost of their monomers, and of the simplifying in the preparation process allowed by the fact that all the monomers used are in the gas phase, and hence can be easily removed at the end of the polymerization.

The copolymerization of ethylene and of alpha-olefins either in the presence or in the absence of diolefins has been carried out by using different types of catalysts: one of the most widely used is constituted by the product from the reaction of a vanadium compound and an organometallic derivative of the metals of Groups I,II and III of the Periodic System (GB 1,277,629; IT 890,604; GB 1,277,353; IT 879,026; GB 1,519,472).

The copolymers obtained by this catalyst are completely or substantially amorphous, and are obtained with rather low yields (grams of polymer per gram of vanadium).

In particular, from GB-A 2 099 836, it is known to prepare ethylene-propylene-1,4-hexadiene terpolymers with catalysts comprising organometallic compounds of aluminium in combination with solid components constituted by titanium halides supported on magnesium halides in an active form. The solid components of such catalysts do not contain electron-donor compounds, and contain amounts of titanium extractible with titanium tetrachloride at 80°C, which are considerably higher than 50%. Also in such case, the yields of terpolymer, as well as the percentage of copolymerised dienic monomer, are rather low.

Catalysts having a much higher catalytic activity than the above said catalysts have already been claimed by the present Applicant in some prior patents.

In USP 3,789,036, e.g., a process is disclosed for the preparation of elastomeric terpolymers, which can be vulcanized with sulphur, of ethylene with propylene and with either conjugated or non-conjugated diene monomers, by using a catalyst obtained by mixing an Al-alkyl or an Al-alkyl hydride with the product from the reaction of a titanium compound with a support constituted by an anhydrous magnesium halide in active form. However, neither the yields obtained nor the quality of the product are yet satisfactory.

In USP 4,013,823 a process is disclosed for the preparation of saturated ethylene/propylene elastomers by copolymerization of the ronomers in the presence of catalysts formed by a mixture of an Al-alkyl with a titanium halide, this latter being supported on a complex of an anhydrous magnesium halide with a Lewis base(electron donor). Such a catalyst is however not suitable for use in the preparation of terpolymers of ethylene and propylene with a conjugated diolefin. The yields and the elastomeric properties of the terpolymer are indeed poor.

From Belgian patent No. 848,527 catalysts are moreover known, which are obtained by contacting the following components:

a) a solid product containing at least on its surface compounds or mixtures of compounds comprising Mg, Ti, halogens and an electron-donor compound, such product being chararacterized in that at least 50% by weight of Ti compounds present in it are insoluble in Ti tetrachloride at 80°C;

b) an organometallic compound of Al, in the form of a complex with an electron-donor compound.

Such catalysts make it possible, according to the above mentioned patent, propylene or propylene with small amounts of ethylene to be polymerized with very high yield, and propylene homopolymers or crystalline saturated copolymers of propylene and ethylene to be obtained with extremely high yield.

### The Present Invention

It has been now surprisingly found,and that is the object of the present invention,that by using catalysts obtained by contacting the above described solid product with an organometallic compound of Al, unsaturated elastomeric copolymers of improved quality can be obtained with very high yield, by polymerizing ethylene with propylene and one or more conjugated diene(s).

Thanks to the high yield of these catalysts, the preparation becomes possible of the said copolymers by simplified methods, which do not comprise steps of purification from the catalyst residues.

In particular, the catalysts used in the present invention comprise the products obtained by contacting the following components:

A) a solid product containing at least on its surface compounds or mixtures of compounds comprising Mg, Ti, halogens and an electron-donor compound, the electron- donor compound moles/ Ti ratio being greater than 1, the halogen atoms /Ti ratio being greater then 4; such component being furthermore chararacterized in that at least 50% by weight of Ti compounds present in it are insoluble in Ti tetrachloride at 80°C, and that the surface area after extraction by $TiCl_4$ is greater than 40 $m^2/g$.

B) an organometallic compound of aluminium selected among Al-trialkyls, Al-alkyl hydrides and Al-alkyl monohalides.

Preferably, the component A) of the invention comprises at least on its surface products obtained from the reaction of Mg halides, selected between Mg dichloride and Mg dibromide, and halogenated compounds of tetravalent Ti, in particular $TiCl_4$, $Tibr_4$, Ti halo-alkoxides, with an electron-donor compound, selected from the esters of aromatic acids, such as, e.g., benzoic acid, and the aromatic nitriles, such as, e.g., benzonitrile. The nature and composition of this component are furthermore defined by the following parameters.

The Mg/Ti atomic ratio is comprised within the range of from 3 to 40 and preferably of from 10 to 30; the halogen atoms/Ti ratio is comprised within the range of from 10 to 90 and preferably of from 20 to 80, and the electron-donor compound moles/Ti ratio is comprised within the range of from 1 to 6 and preferably of from 1.2 to 3.

Particularly suitable components A) are furthermore characterized in that the highest-intensity line appearing in the spectrum of Mg chloride or bromide of normal type, as defined in ASTM 3-0854 and 15-836 cards for the chloride and bromide respectively, has decreased in relative intensity and has an unsymmetrically broadened shape, forming a halo showing an intensity peak shifted relatively to the interplanar distance d of the highest-intensity line, or the spectrum is characterized in that such highest-intensity line is not any longer present, and instead of it a halo with an intensity peak shifted relatively to the'distance d of said line is present.

In case of $MgCl_2$, the intensity peak of the halo is 10 comprised between d = 0.244 and 0.297 nm (2.44 and 2.97 Å). In case of $MgBr_2$, the intensity peak of the halo is comprised between0.280 and 0.324 nm (2.80 and 3.24 Å).

Component A) can be prepared according to various routes.

A general method consists in treating by a liquid Ti compound a composition comprising a Mg halide and a complex formed by said Mg halide and an electron-donor compound, wherein the Mg/moles of electron-donor compound ratio in greater than 2 a d is preferably comprised within the range of from 2 to 15, under such conditions that on said composition the fixing occurs of a certain amount of Ti compounds, and in subsequently separating the solid reaction product from the liquid phase, under conditions under which on the product practically no Ti compounds soluble in boiling n-heptane and extractable by Ti tetrachloride at 80°C may remain.

Another method consists in reacting an adduct of Mg halide and an alcohol, with an Al-alkyl, and in subsequently treating the reaction product with an excess of $TiCl_4$ at temperatures ranging from 60°C to $TiCl_4$ boiling point. Al-alkyl compound is used in such case in a ratio to the adduct at least sufficient to react with all the alcohol present.

A further method consists in co-grinding the Mg halide, the titanium compound and the electron-donor compound under such conditions as to reduce the size of Mg halide crystallites to average values comprised within the range of from 4.0 to 10.0 nm (40 to 100 Å), and in subsequently treating the so-obtained powder with an aliphatic or aromatic organic solvent selected among the liquids having dielectric constant at 20°C greater than or equal to 2. The preferred conditions for the treatment of the co-ground solid by the liquid mentioned are the following: temperatures comprised between 10 and 150°C; times comprised between 0.5 and 10 hours, Mg halide/organic liquid ratio ranging from 5:1 to 1:12 by weight. Finally, the solid is washed with an aliphatic hydrocarbon to remove the soluble Ti compounds and is dried.

The Al organometallic compounds which can be used as component B) are preferably constituted by Al-trialkyl compounds, such as for example trietilaluminium, tri-npropylaluminium, triisobutylaluminium,

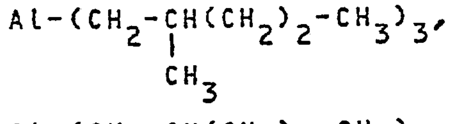

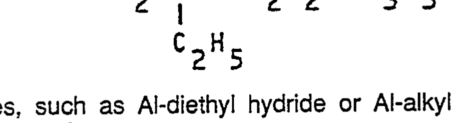

$Al(C_{12}H_{25})_3$, by Al-alkyl hydrides, such as Al-diethyl hydride or Al-alkyl monohalides, such as diethylaluminium chloride, or mixtures thereof.

The copolymerization of ethylene with propylene and the diene by using the catalyst defined hereinabove is carried out by operating in the presence or in the ab sence of an inert hydrocarbon diluent,such as, e.g., n-propane, n-butane, n-hexane,n-heptane, n-decane, benzene,toluene, in the presence of a mixture of the catalyst components A) and B).

In such a mixture, the ratio between such components does not seem crytical; molar Al/Ti.ratios greater than 1 and preferably greater than 50 are preferably used.

The polymerization temperature is generally maintained between -20 and 150°C, and preferably between 20 and 90°C. The operating pressure is a function of the temperature and of the reacting mixture, and can be the atmospheric or a superatmospheric pressure.

The conjugated diolefins which can be polymerized with ethylene and propylene by the process of the present invention can be for instance 1,3-butadiene,isoprene, piperylene and monocyclopentadiene.

Propylene, ethylene and the diene are preferably polymerized with each other in such ratios as to obtain copolymers containing from 30 to 60% by weight of propylene and a diene amount not greater than 10% by weight.

The following Examples are reported to the purpose of better illustrating the invention without it being limited to them.

Preparation of ethylene-propylene-diene terpolymers

Into a 1500-ml steel autoclave, equipped with magnetic stirrer, jacket and temperature control means, propylene and the diene are charged, after purging by nitrogen. The temperature is increased to the prefixed value, and ethylene under the desired pressure is introduced up to saturation.

The catalytic system is prepared separately,by placing in contact the solid catalytic component A) and component B) under nitrogen for 5 minutes at room temperature.

The suspension obtained is injected into the autoclave through an ethylene-pressurized small bomb.

The test is carried out by keeping constant the temperature (automatically) and the pressure (by feeding ethylene).

When the use of $H_2$ as molecular weight regulator is required, this is introduced into the reactor before the saturation by ethylene.

At the end of the test, 10 ml of acetone, containing IRGANOX® 1010 in the ratio 0.3/100 to the polymer produced, is introduced.

After 5 minutes the monomers are vented off and the autoclave is opened. The polymer is recovered and dried under nitrogen stream at 70°C.

Preparation of Catalytic Component "A1"

Into a stainless-steel container of cylindrical shape, having an inner volume of 1 litre, provided with outer jacket, containing 210 steel balls of 16 mm in diameter, by operating under a dry nitrogen atmosphere, 44,2 g of anhydrous $MgCl_2$ ($H_2O$ 1% by weight) (equal to 0.46 mol) and 24.3 g of ethyl benzoate (equal to 0.162 mol) are introduced.

After tightly sealing the container, the grinding is carried out by means of a mill of "Vibratom" type marketed by Siebtechnik, adjusted to operate at 1500 oscilla tions per minute, with total amplitude of 35 mm. The temperature is kept controlled at 18°C by circulating water through the jacket.

After a 30 hours grinding, into the container, always operating under nitrogen atmosphere, 30.73 g of $TiCl_4$ (equal to 0.162 mol) is introduced.

The grinding is started again, under the same conditions, and is continued over more than 20 hours.

The powdered product recovered after the discharging has the following composition by weight:
Mg = 11.05%; Ti = 7.95%; Ethyl benzoate = 20.5%.

Preparation of Catalytic Component "A2"

By the same equipment as used for the preparation of the catalytic component "A1", 72.5 g of anhydrous $MgCl_2$ (equal to 0.76 mol) and 26.2 g of ethyl benzoate (equal to 0.174 mol) are ground together for 50 hours at 70°C.

Twenty grams of the so-obtained powder is submitted to two titanation treatments, each by 285 ml of $TiCl_4$ at 80°C for 2 hours. This operation is carried out in a 500-ml glass flask, provided with jacket, filter plate and valve for bottom-discharging, reflux condenser and stirrer, with nitrogen-filled plenum chamber.

After the processing at 80°C, the liquid phase is separated by filtering through the filter plate, and the solid is washed five times with 100-ml portions of hexane at 50oC, and is then dried in vacuo (under a residual pressure of about 3 $mm_{Hg}$) at 40°C for 3 hours.

The analytical composition by weight of the product is the following:
Mg = 19.9%; Ti = 1.5%; Ethyl benzoate = 10.2%.

Preparation of the Catalytic Component "A3"

By using the same equipment as described for the preparation of catalytic component "A1", 70 g ofanhydrous $MgCl_2$ (equal to 0.734 mol) and 30 g of ethyl benzoate (equal to 0.2 mol) are ground together for 50 hours at 18°C.

Twenty grams of the so-obtained powder is submitted to the treatment with $TiCl_4$, under the same conditions as used for the preparation of catalytic component "A2", with the only difference that the treatment is carried out once only.

After filtration, washing with hexane and drying as described for the catalytic component "A2", the product obtained has the following composition by weight: Mg = 16.35%; Ti = 1.2%; Ethyl benzoate = 21.4%.

Preparation of Catalytic Component "A4"

By using the same equipment as described for the preparation of catalytic component "A1",72.5 g of anhydrous $MgCl_2$ (equal to 0.76 mol) and 13 g of benzonitrile (equal to 0.126 mol) are ground together for 60 hours at 20°C.

Twenty grams of the so-obtained powder is submitted to two titanation treatments as described for the preparation of catalytic component "A2".

The dry product obtained has the following composition by weight:

Ti = 1.56%; Mg = 17.3%; benzonitrile = 10.2%.

Preparation of Catalytic Component "A5"

By the same procedure as used for the preparation of catalytic component "A1", 72.5 g of anhydrous $MgCl_2$(equal to 0.76 mol) and 26.12 g of benzonitrile (equal to 0.253 mol) are ground together for 60 hours at 20°C.

Twenty grams of the so-obtained powder is submitted to two titanation treatments as described for the preparation of catalytic component "A2".

The dry product obtained has the following composition by weight:

Ti = 0.72%; Mg = 16.7%; benzonitrile = 18.55%.

Preparation of Catalytic Component "A6"

Into a 250-ml glass flask provided with nitrogenfilled plenum chamber, equipped with stirrer, reflux condenser, thermometer and temperature-controlling oil bath, 15 g of catalytic component "A1" and 150 ml of anhydrous 1,2-dichloroethane are charged.

The suspension is heated under stirring for 2 hours at its reflux temperature (83.5 °C), and is then cooled to room temperature. The solid is decanted, and the liquid is separated from it by siphoning.

The solid is then submitted to three washings at 50°C under stirring, each washing being carried out by 150 ml of anhydrous hexane.

The product is finally dried in vacuo(residual pressure 3 $mm_{Hg}$) at 40°C for 3 hours.

The composition by weight of the so-obtained product is the following:

Mg = 16.95%; Ti = 1.5%; Ethyl benzoate = 19.4%.

Catalytic Component "B"

B1: Triisobutylaluminium in hexane solution at 20% w/v, stored under nitrogen.

B2: Diethylaluminium monohydride in 15% w/v hexane solution stored under nitrogen.

In the following Table the polymerization conditions, together with the characteristics of the polymers obtained, the vulcanization conditions and the properties of vulcanized copolymers are reported.

The vulcanization of terpolymer has been carried out (after the rubber compound having been homogenized on calender at 80°C for 10 minutes) on plate-press at 160°C for 30 minutes, with the following formulation:

Terpolymer 100 parts
ZnO 5 parts
Stearic acid 1 part
FEF carbon black 55 parts
Oil Cortis 100 M 30 parts
Tetramethylthiuram monosulphide 1.5 parts
Mercaptobenzothiazole 0.75 parts
Sulphur 1.5 pars

The determination of tension set values has been carried out on samples of polymer having useful length of 50 mm, thickness and width of 2 mm, cut along the perpendicular direction relatively to the advancement direction of the compound on the roller mill.

For the tension set test, the standard specimen is stretched by 200% in the metal clamp of the device and is kept resting at 23°C for 10 minutes. Subsequently, the specimen is removed from the clamp, is kept resting for 10 minutes at +23°C and the measurement is carried out soon after by using a template.

Computation of Results

$$\% \text{ Tension Set} = \frac{L - L_o}{L_o} \times 100$$

wherein:
L= length of specimen after the deformation (mm);
$L_0$ = initial length of specimen (50 mm).

The template is already calibrated to directly express the % tension set .

For each test, usually two specimens are used.

The two repeated tests carried out by the same operator must not give differences greater than 5%.

Table

| Example No. | Comparison 1 | 1 | 2 | 3 | 4 | 5 | 6 | 7 (Comparative example) | 8 |
|---|---|---|---|---|---|---|---|---|---|
| Component "A" | A1 | A2 | A2 | A3 | A2 | A4 | A5 | A2 | A6 |
| Component "B" | B1 | B1 | B1 | B1 | B2 | B1 | B1 | B1 | B1 |
| Propylene g | 494 | 416 | 494 | 494 | 494 | 494 | 494 | 520 | 494 |
| Butadiene g | 37 | 31.1 | 37 | 37 | 37 | 37 | 37 | – | 37 |
| Diene* | – | – | – | – | – | – | – | 1,4-hexadiene) | – |
| Diene* g | – | – | – | – | – | – | – | 84 | – |
| Component "A" g | 0.0115 | 0.006 | 0.014 | 0.0055 | 0.027 | 0.0325 | 0.055 | 0.14 | 0.02 |
| Component "B" g | 1 | 1 | 1 | 1 | 0.43 | 1 | 1 | 4 | 1 |
| Temperature (°C) | 40 | 40 | 40 | 40 | 40 | 40 | 40 | 20 | 40 |
| Total pressure (atm) | 18.2 | 19.8 | 18.6 | 18.9 | 19.2 | 19.1 | 19.1 | 10.8 | 19.7 |
| Time (h) | 2 | 2 | 2 | 2 | 2 | 1 | 2 | 1 | 2 |
| Yield (g/g of Ti) | 126 000 | 940 000 | 870 000 | 681 000 | 363 000 | 357 000 | 175 000 | 100 000 | 362 000 |
| /#/$T_{135}$ (dl/g) | 5 | 4.3 | 2.9 | 4.55 | 3.05 | 3.66 | 4.18 | 2.06 | 4.2 |
| $C_3$ (% by weight) | 37.6 | 35.6 | 43.4 | 34.9 | 37.4 | 40.2 | 36.4 | 53.9 | 32.6 |
| Diene* (% by weight) | – | – | – | – | – | – | – | 2.8 | – |
| $C_4$ = (1–4 trans, % by weight) | 2.5 | 2.82 | 2.25 | 1.6 | 2.4 | 3.2 | 2.1 | – | 3 |
| $C_4$ (1–2 vinyl, % by weight) | 0.25 | 0.25 | 0.25 | 0.25 | 0.25 | 0.25 | 0.25 | – | 0.25 |
| $ML^{1+4}$ 121°C (crude polymer) | 57 | 55 | 60 | 56 | 50.5 | – | – | – | 62 |
| Tensile strength (kg/cm$^2$) | 104 | 130 | 107 | 119 | 101 | – | – | 121 | 127 |
| Elongation at break (%) | 660 | 590 | 555 | 810 | 580 | – | – | 450 | 660 |
| Tension set 200% (%) | 26 | 21 | 20 | 20 | 20 | 31 | 28 | 11 | 26 |

* Different from butadiene

## Claims

1. Process for the preparation of elastomeric unsaturated polymers from ethylene with propylene and one or more conjugated diene(s) by a catalyst obtained by contacting the following components:

A) a solid product containing at least on its surface compounds or mixtures of compounds comprising Mg, Ti, halogens and an electron-donor compound, the electron-donor compound / Ti molar ratio being greater than 1, the halogen atoms /Ti ratio being greater then 4; such component being furthermore chararacterized in that at least 50% by weight of the Ti compounds present in it are insoluble in Ti tetrachloride at 80°C, and that the surface area of the solid after extraction by $TiCl_4$ is greater than 40 m$^2$/g.

B) an organometallic compound of aluminium selected among an Al-trialkyl, an Al-dialkyl hydride and an Al-alkyl monohalide.

2. Process according to claim 1, wherein the component A) is obtained by the reaction of a liquid halogenated Ti compound with a solid composition comprising an Mg halide, selected between Mg dichloride

and Mg dibromide, and a complex between the Mg dihalide and the electron-donor compound preferably selected among organic esters, in particular among the esters of aromatic acids, and aromatic nitriles; said solid composition being characterized in that in its X-ray spectrum the highest-intensity line appearing in the spectrum of the halide of normal type, as defined in ASTM 3-0854 and 15-836 cards for the dichloride and the dibromide respectively, has decreased in relative intensity and has an unsymmetrically broadened shape, forming a halo showing an intensity peak shifted relatively to the interplanar distance d of the highestintensity line, or the spectrum is characterized in that such highest-intensity line is absent, and instead of it a halo with an intensity peak shifted relatively to the distance d of the highest-intensity line is present.

3. Process according to claim 1, wherein the electrondonor compound is ethyl benzoate.

4. Process according to claims 1–3 for the preparation of ethylene, propylene, butadiene terpolymers.

**Patentansprüche**

1. Verfahren zur Herstellung elastomerischer ungesättigter Polymere aus Äthylen mit Propylen und einem oder mehreren konjugierten Dienen, mittels eines durch Zusammenbringen nachstehender Komponenten erhaltenen Katalysators:

A) Ein festes Produkt, das zumindest an seiner Oberfläche Mg, Ti, Halogene und eine Elektronendonor-Verbindung umfassende Verbindungen oder Verbindungsmischungen enthält, wobei das Molverhältnis Elektronendonor-Verbindung/Ti mehr als 1 und das Halogenatome/Ti-Verhältnis mehr als 4 beträgt; wobei diese Komponente ausserdem dadurch gekennzeichnet ist, dass zumindest 50 Gew.-% der darin vorhandenen Ti-Verbindungen in Ti-Tetrachlorid bei 80°C unlöslich ist, und dass der Flächeninhalt des Festkörpers nach Extraktion mittels $TiCl_4$ grösser als 40m²/g ist.

B) Eine unter Al-Trialkyl, Al-Dialkylhydrid und Al-Alkylmonohalogenid gewählte metallorganische Aluminium-Verbindung.

2. Verfahren nach Anspruch 1, wobei die Komponente A) durch Umsetzung einer flüssigen halogenierten Ti-Verbindung mit einer festen Zusammensetzung erhalten wird, welche ein unter Mg-Dichlorid und Mg-Dibromid gewähltes Mg-Halogenid und ein Komplex aus dem Mg-Dihalogenid und der Elektronendonor-Verbindung umfasst, welche vorzugsweise unter organischen Estern, insbesondere unter Estern aromatischer Säuren, und aromatischen Nitrilen gewählt ist; wobei die genannte feste Zusammensetzung dadurch gekennzeichnet ist, dass in ihrem Röntgenspektrum die mit maximaler Stärke im Spektrum des Halogenids normaler Art, wie dieses in den ASTM-Vorschriften 3-0854 und 15-836 für Dichlorid bzw. Dibromid definiert ist, auftretende Linie in relativer Stärke vermindert ist und sich unsymmetrisch erweitert und dabei einen Halo bildet, welcher einen gegenüber dem interplanaren Abstand d der Linie maximaler Stärke verschobenen Stärke-Höchstwert aufweist, oder das Spektrum ist dadurch gekennzeichnet, dass diese Linie maximaler Stärke fehlt und an deren Stelle ein Halo mit einem gegenüber dem Abstand d der Linie maximaler Stärke verschobenen Stärke-Höchstwert tritt.

3. Verfahren nach Anspruch 1, wobei die Elektronendonor-Verbindung Äthylbenzoat ist.

4. Verfahren nach Anspruch 1 bis 3 zur Herstellung von Äthylen-Propylen-Butadien-Terpolymeren.

**Revendications**

1. Procédé pour la préparation de polymères élastomères non saturés à partir de éthylene et propylène et un ou plusieurs diènes conjugués au moyen d'un catalyseur obtenu en agissant par contact les suivants constituants:

A) Un produit solide contenant au moins sur sa surface composés ou mélanges comprenants Mg, Ti, halogènes et un composé donneur d'électrons, le rapport molaire donneur d'électrons/Ti étant majeur que un, le rapport atomes d'halogène/Ti étant majeur que 4; un tel composé étant en outre caractérisé par le fait qu'au moins le 50% en poids des composés de Ti présents en cela sont insolubles en tétrachlorure de titan à 80°C, et que la surface du solide après extraction par $TiCl_4$ est majeur que 40 m²/g.

B) Un composé organométallique d'aluminium choisi dans le group des Al-trialkyls, des hydrures de Al-dialkyl, et des monohalogénures de Al-alkyl.

2. Procédé suivant la revendication 1, dans lequel le constituant (A) est obtenu au moyen de la réaction d'un composé halogéné liquide du Ti avec une composition solide comprenant un halogénure de Mg, choisi entre le dichlorure de Mg et le dibromure de Mg, et un complexe entre le dihalogénure de Mg et le composé donneur d'électrons préférablement choisi entre les esters organiques, en particulier entre les esters des acides aromatiques et les nitriles aromatiques; susdite composition solide étant caractérisée par le fait que dans son spectre aux rayons X la ligne d'intensité maximum qui apparaît dans le spectre de l'halogénure du type normal, comme il est défini dans les fiches ASTM 3-0854 et 15-836 respectivement pour le dichlorure et le dibromure, est diminuée d'intensité relative et déborde asymétriquement en formant un halo qui présente un maximum d'intensité déplacé relativement à la distance interplanaire d de la ligne d'intensité maximum, ou le spectre est caractérisé par le fait que cette ligne d'intensité maximum est absente, tandis qu'en est présent un halo avec un maximum d'intensité déplacé relativement à la distance d de la ligne d'intensité maximum.

3. Procédé suivant la revendication 1, dans lequel le composé donneur d'électrons est benzoate d'éthyle.

4. Procédé suivant les revendications 1–3, pour la préparation de terpolymères d'éthylène, propylène, butadiène.